# EUROPEAN PATENT SPECIFICATION

(11) **EP 4 483 064 B1**
(45) Date of publication and mention of the grant of the patent: **26.11.2025**
(21) Application number: 23803104.1
(22) Date of filing: 26.04.2023
(51) Int. Cl.: F16B 12/20, F16B 12/32, F16B 12/12

(54) **BRACKET, SYSTEM AND METHOD FOR INTERCONNECTING FURNITURE PARTS**
KLAMMER, SYSTEM UND VERFAHREN ZUR VERBINDUNG VON MÖBELTEILEN
SUPPORT, SYSTÈME ET PROCÉDÉ POUR RELIER DES ÉLÉMENTS DE MEUBLE ENTRE EUX

(30) Priority: 11.05.2022 DK PA202200443
(43) Date of publication of application: 01.01.2025
(73) Proprietor: SISO A/S, 2740 Skovlunde (DK)
(72) Inventor: PERELMAN, David Tomas, 2740 Skovlunde (DK); EL SAFTY, Amir, 2740 Skovlunde (DK)
(74) Representative: Budde Schou A/S
(86) International application number: PCT/IB2023/054290
(87) International publication number: WO 2023/218274

(56) References cited:
- WO-A2-2008/087295
- DE-A1- 19 941 659
- DE-A1- 4 004 137
- DE-U1- 202020 101 382

## Description

### TECHNICAL FIELD

The present invention relates to a bracket, a system and a method for interconnecting furniture parts.

### BACKGROUND OF THE INVENTION

The technique of interconnecting elements such as furniture part in a releasable manner may be done with releasable fastening means such as screws, or by interconnecting brackets.

When using interconnecting brackets, a first "female" bracket part is mounted to a first furniture part and a second "male" bracket part is mounted to a second furniture part, whereafter the two brackets may be interconnected by a sliding motion from a first specific end of the typically elongated brackets toward the opposite end.

The "male" bracket is inserted into one end of a channel in the "female" bracket and may be inserted all the way into the channel until an end of the channel functions as a stop, preventing any further displacement between the two brackets. Such coupling between two furniture parts is simple and fast and provides the possibility of establishing an effective releasable coupling.

An example of prior art systems is disclosed in DE19941659A1. The system discloses a "male" and a "female" coupling as defined above, in which the two couplings may be engaged in a sliding motion. Another example of prior art is shown in WO 2008/087295 A2, which discloses a bracket for interconnecting two furniture parts. The bracket is however constructed such that two brackets can only be inserted into each other from one direction, which limits the useability of the bracket.

However, the above defined system requires two differently shaped brackets, which increases manufacturing costs and requires increased attention when installing the brackets. Further, as the brackets can only be interconnected by a sliding motion in exclusively one specific direction, again special attention needs to be taken when installing the brackets, and the fixed direction of interconnection limits the possibilities of flexibility during installation.

DE 20 2020 101382 U discloses a bracket for interconnecting two furniture parts, said bracket having a first and second end, and a base with a lower surface for facing and interconnection with a first furniture part and an upper surface, said bracket having at least one wall element projecting from said upper surface, and for facing and interconnection with an identical second bracket arranged on a second furniture part, said at least one wall element and said base defining a channel configured to receive and interconnect with at least one wall element of said second bracket, said bracket further comprising a fixed stop within said channel at a central longitudinal position of said bracket, for preventing movement between said brackets beyond said stop, wherein said channel is open at said first and second end, such that said at least one wall element of said second bracket may be inserted into said channel from either end.

It is therefore an object of the present invention to overcome the above-defined problems, and to arrange a bracket, a system and a method for interconnecting two elements, such as two furniture parts, by brackets, where the brackets can be interconnected from two directions by a sliding motion from both ends of the brackets, thereby increasing the flexibility.

It is a further object of the present invention to arrange a bracket which can be interconnected to another substantially identical bracket. Hereby the necessity of manufacturing two differently shaped brackets is avoided, whereby production costs are reduced.

The above object and advantages, together with numerous other objects and advantages, which will be evident from the description of the present invention, are according to a first aspect of the present invention obtained by:
A bracket for interconnecting two furniture parts, the bracket having a first and second end, and a base with a lower surface for facing and interconnection with a first furniture part and an upper surface, the bracket having at least one wall element projecting from the upper surface, and for facing and interconnection with an identical second bracket arranged on a second furniture part,
the at least one wall element and the base defining a channel configured to receive and interconnect with at least one wall element of the second bracket,
the bracket further comprising a fixed stop within the channel at a central longitudinal position of the bracket, for interacting with an identical stop on the second bracket, for preventing movement between the brackets beyond the stop, where the channel is open at the first and second end, such that the at least one wall element of said second bracket may be inserted into the channel from either end.

The bracket is preferably manufactured from an aluminum or a steel alloy, but may also be manufactured from other suitable materials, such as plastic, etc. and arranged to be connected by suitable connection means, such as screws or projections, to individual furniture parts.

The bracket comprises a bottom surface for facing a furniture part, the bottom surface being arranged as a lower surface of a base, preferably formed as a substantially flat elongated plate element.

At least one wall element extends from a side edge of the base and projects from an upper surface, opposite the lower surface. In another embodiment, the bracket comprises two wall elements extending from the upper surface of the base element.

The wall element(s) and the base together define a channel, which is configured to receive and interconnect with at least one wall element of a second, preferably similar, bracket.

It is hereby possible to interconnect two different furniture parts in a simple way by using two identical brackets.

By arranging the fixed stop at a central longitudinal position, and centrally longitudinal within the channel, identical brackets can be used in relation to two furniture parts, which, due to the centrally positioned stop, can be interconnected from two different mounting directions being co-parallel with the channel, hereby increasing the flexibility of the brackets.

The channel is open at the ends of the bracket. Hereby, it is possible to interconnect the brackets with a sliding motion between the brackets from both ends. As mentioned above, the possibility of providing an interconnection from two opposite directions increases the flexibility of the bracket.

Additionally, the bracket may be arranged with an opening in the wall elements, such that the two brackets may first be inserted in one another in an overlapping manner in a direction perpendicular to the longitudinal direction of the channel, and thereafter further interconnected by a sliding motion in the longitudinal direction of the channel until the stop of each bracket engages. By arranging the possibility of an initial overlap, the installation height of the bracket is reduced, which can be necessary if only limited installation space is available.

According to a preferred embodiment of the first aspect of the invention, the at least one wall element comprises a connection flange extending from the wall element at an upper end thereof, such that when the bracket has been connected to the second bracket, the connection flange prevents the brackets from being disengaged in a direction transverse in relation to a longitudinal direction of the channel.

At least one wall element of the bracket is provided with a flange extending from an upper end of the wall element and in a radial direction thereof, and preferably in a direction substantially parallel with the upper surface of the base.

The above-described stop arranged in the channel prevents further movement between two interconnected brackets in the longitudinal direction of the channel, and the flange(s) prevents movement between two interconnected brackets in a direction perpendicular to the longitudinal direction of the channel. When two brackets are interconnected, the flange(s) of each bracket abuts and functions as a "hook", hereby preventing the brackets from being separated.

According to a preferred embodiment of the first aspect of the invention, the connection flange only spans part of a longitudinal direction of the bracket.

As described above, the wall elements may be arranged with an opening or openings toward the channel in a direction substantially perpendicular to the longitudinal direction of the channel, such that two brackets first are engaged in an overlapping manner before the final sliding and engaging motion. This opening(s) is arranged by the connection flange not spanning the entire length of the wall element(s).

According to a preferred

embodiment of the first aspect of the invention, the stop is arranged on the connection flange and/or the wall element and/or the base, in the channel between the connection flange and the upper surface of the base. The stop in the channel of each bracket is arranged between the upper surface of the base and a lower surface of the flange. The stop may thus be arranged entirely on the lower surface of the flange, the upper surface of the base, or the wall element between the surface of base and the flange.

The stop may however also be arranged in the transition between the wall element and the flange and/or the transition between the wall element and the base, or in a preferred embodiment spanning the entire distance between the flange and the upper surface of the base, and thus arranged on all three elements.

According to a preferred embodiment of the first aspect of the invention, an upper part of the at least one wall element comprises a concave shape.

The upper part of the at least one wall element is preferably arranged having a concave shape. Preferably, the lower surface of the connection flange(s) also has a concave shape. Arranging the upper part of the at least one wall element with a concave shape, and preferably also the lower surface of the connection flange(s), reduces the area of direct surface contact between two interconnected brackets and hereby reduces the friction between the two brackets.

Another technical effect achieved by arranging the concave shape(s) is that two brackets inserted into each other from the ends may be inserted in a slightly oblique angle in relation to the longitudinal direction of the channel.

According to a preferred embodiment of the first aspect of the invention, a lower surface of the connection flange has a downwards inclination in relation to the upper surface of the base.

The connection flange, which extends in a radial direction in relation to the wall element, and preferably in a direction substantial parallel with the base, has a lower surface facing the base, where the lower surface has a downwards inclination from the junction with the wall element and toward the base.

By arranging a lower surface of the connection flange with such downwards inclination it is possible to arrange the bracket with only one wall element and still being able to prevent movement of the two brackets in a direction perpendicular to the upper surface of the base and further a direction perpendicular to the longitudinal direction of the channel, but parallel with the plane of the upper surface of the base. Hereby, a most simple yet versatile bracket can be made.

According to a preferred embodiment of the first aspect of the invention, the first wall element is extending along a first side of the base, and the bracket comprises a second wall element extending parallel with the first wall element towards an opposite second side of the base, the second wall element extending a shorter distance along the base compared to the first wall element.

The bracket preferably comprises two wall elements extending parallel in relation to each other. Hereby, the longitudinal channel is defined by the upper surface of the base and the two parallel wall elements, which increases the strength of the connection between the two brackets.

According to a second aspect of the present invention, the above objects and advantages are obtained by:
A system comprising two brackets according to any of the embodiments of the first aspect of the invention.

The above defined system, which comprises two of the described brackets, provides an arrangement which improves the connectability of two furniture parts in an easy and flexible manner.

According to a third aspect of the present invention, the above objects and advantages are obtained by:
A method for interconnecting two furniture parts, wherein the method comprising the following steps:
- providing a system according to the second aspect of the invention,
- arranging first and second brackets on first and second furniture parts,
- engaging the brackets, and
- connecting the brackets by a sliding motion in a longitudinal direction of the channel until the fixed stop on each bracket abuts and prevents further sliding movement of the brackets in the longitudinal direction.

The steps as defined above provide a method of interconnecting two furniture parts, where the brackets can be interconnected from two directions, which increases the flexibility of the bracket, and whereby only one type of bracket is necessary for the functioning of the system.

According to a preferred embodiment of the third aspect of the invention, wherein before the step of connecting the brackets by a sliding motion, the brackets are engaged partly overlapping in a direction substantially perpendicular to the longitudinal direction.

As previously described, the bracket may be arranged such that two brackets may first be engaged in an overlapping manner in a direction perpendicular to the longitudinal direction of the channel, and thereafter interconnected by a sliding motion until the stops of the two brackets engage. Hereby, the installation height of the bracket is reduced, which can be necessary if only limited installation space is available.
Fig. 1A is a perspective view of a first embodiment of the bracket.
Fig. 1B is a top view of a first embodiment of the bracket.
Fig. 1C-1E are side and end views of a first embodiment of the bracket.
Fig. 1F-1G are cross-sectional views of the first embodiment of the bracket.
Fig. 2A is a perspective view of a second embodiment of the bracket.
Fig. 2B is a top view of a second embodiment of the bracket.
Fig. 2C-2E are side and end views of a second embodiment of the bracket.
Fig. 2F-2G are cross-sectional views of the second embodiment of the bracket.
Fig. 3A and 3H are perspective views of two examples not forming part of the invention, respectively, of the bracket.
Fig. 3B shows an example not forming part of the invention of the bracket.
Fig. 3C-3E are side and end views of an example not forming part of the invention of the bracket.
Fig. 3F-3G are cross-sectional views of the example not forming part of the invention of the bracket.
Fig. 3H is a perspective view of an example not forming part of the invention of the bracket.
Fig. 4A-4B are a side and top view of two interconnected brackets of the first embodiment.
Fig. 4C-4D are cross-sectional views of the brackets shown in fig. 4A-4B.
Fig. 5A-5B are a side and top view of two interconnected brackets of the second embodiment.
Fig. 5C-5D are cross-sectional views of the brackets shown in fig. 5A-5B.
Fig. 6A-6B are a side and top view of two interconnected brackets of the example not forming part of the invention.
Fig. 6C-6D are cross-sectional views of the brackets shown in fig. 6A-6B.

The present invention wilt now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will thus not be described in detail with respect to the description of each figure.

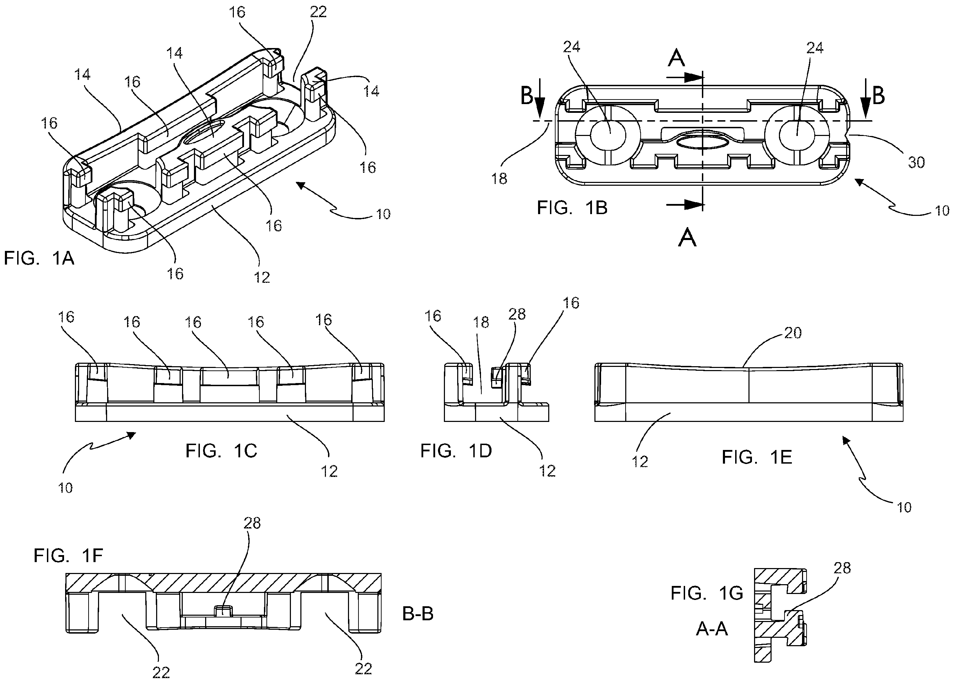

Fig. 1A and 1B show a perspective and a top view of a first embodiment of the bracket 10.

Fig. 1C-1E show side and end views of a first embodiment of the bracket 10, and fig. 1F-1G show cross-sectional views of the first embodiment of the bracket 10.

The bracket 10 comprises a base 12 formed as a substantially flat elongated plate-like element having fixation holes 24 for fastening the bracket 10 to e.g., furniture parts by fixation means such as screws. The bracket 12 is shown elongated but may be arranged more rectangular or even in a roundish shape. The bracket 10 is shown with a first wall element 14 arranged at one side of the base 12 and spanning substantially the entire length of the base 12. The wall element may however be arranged shorter.

The bracket 10 further comprises second wall elements 14' extending parallel with the first wall element 14 and in a spaced relationship thereto, such that the base 12 and the wall elements 14,14' define a channel 18 (see fig. 1B and 1D).

The channel 18 is dimensioned such that a first wall element 14 of a second bracket 10' can be arranged upside down within the channel 22.

The wall elements 14,14' are arranged with connecting flanges 16, which extend in a radial direction of the wall elements 14, 14' and here shown extending in a direction substantially perpendicular to the upper surface of the base 12.

The connection flanges 16 are arranged such that when two brackets 10,10' are connected upside down, as described above, the connection flanges 16 mutual interconnect and prevent the brackets 10,10' from being disengaged in a direction perpendicular to the upper surface of the base 12.

As further illustrated in the figures, the connection flange 16 of the first wall element 14 are disrupted, and the bracket comprises two smaller opposite second wall elements 14' arranged at opposite ends of the bracket 10 and a central second wall element 14'. This configuration allows two brackets 10,10' to be engaged overlapping in a direction perpendicular to the upper surface of the base 12 and thereafter slide into engagement with each other.

Fig. 1D, 1F and 1G show the central second wall element 14' comprising a stop 28 arranged within the channel 22. This stop 28 engages with the stop 28 of a second bracket 14' when the brackets 10,10' are engaged upside down and slided into interconnection. Hereby any further movement in the slided direction is being prevented. In the shown embodiment only one stop is illustrated. However, the bracket may also, or alternatively, comprise stops 28 arranged elsewhere in the central position of the channel 22, such as in a central part on the first wall element 14 and on the central second wall element 14' on the opposite side of the second wall element 14', compared to the illustrated stop 28.

The embodiments shown in all further comprises a marking, arranged as a notch 30, such that the person installing the brackets 10 more easily may ensure that the individual brackets 10,10' are correctly positioned in relation to each other. The brackets 10,10' may be arranged with different marking means, or no marking means at all.

The upper part of the wall elements 14 is arranged with a concave shape 20. As can be seen from fig. 1C, the lower surface of the connection flanges 16 also has a concave shape. Arranging the upper part of the wall elements 14, and preferably also the lower surface of the connection flanges, with a concave shape reduces the area of direct surface contact between two interconnected brackets 10,10' and hereby reduces the friction between the two brackets 10,10'. A further technical effect achieved by providing the concave shape(s) is that two brackets 10,10' inserted into each other from the ends may be inserted in a slightly oblique angle in relation to the longitudinal direction of the channel 18.

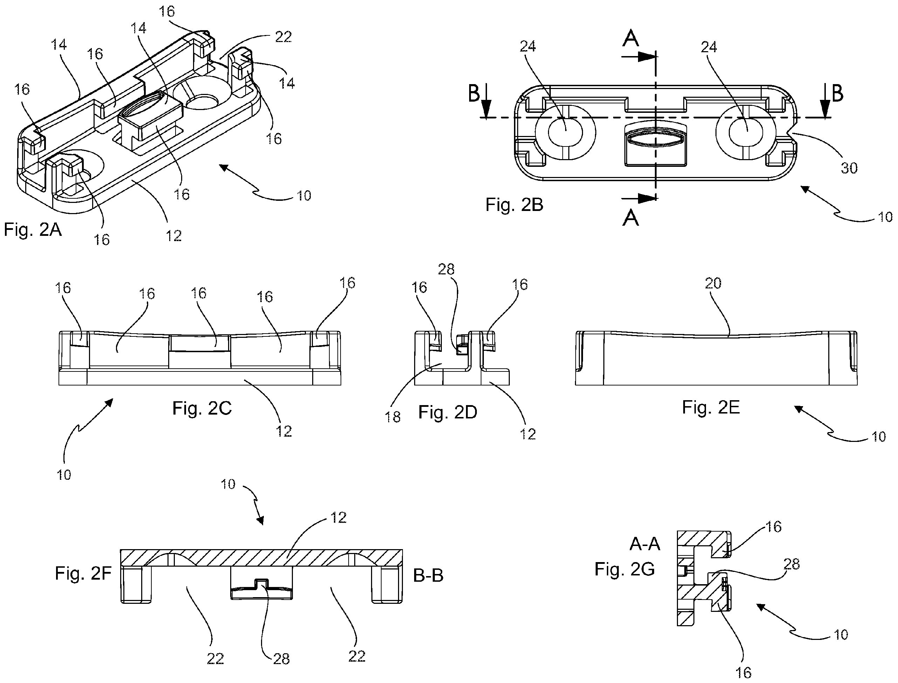

Fig. 2A-2G show a perspective view, a top view, side and end views and cross-sectional views of a second embodiment of the bracket 10.

The embodiment of the bracket 10 shown in figures 2A-2G is in the basic principle similar to the bracket 10 shown in figures 1A-1G. However, as can be seen from the figures, the length of the second central wall element 14' is smaller than the distance between the second central wall element 14' and the two smaller second end wall elements 14'. By such configuration it is possible to engage the brackets in a more overlapping manner, compared to the embodiment shown in fig. 1A-1G, which is particularly useful when the installation space is limited. Thereby, the brackets may be arranged shorter compared to the embodiment shown in fig. 1A-1G.

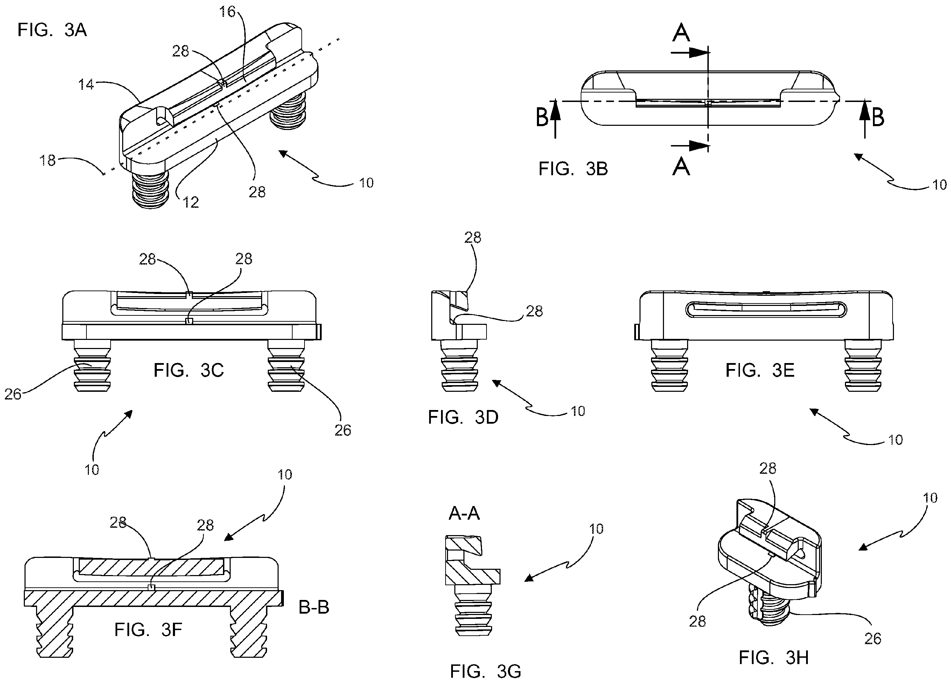

Fig. 3A-3G show a perspective view, a top view, side and end views and cross-sectional views of an example not forming part of the invention of the bracket 10.

The bracket 10 comprises a base 12, which in principle corresponds to the base illustrated in the previous figures. The base is illustrated with fixation means 26, such as dowels, which ensures fast and easy fixation of the brackets 10 to the desired furniture parts. Alternatively, the bracket 10 may comprise fixation holes 24 as previously described. It should be noted that all embodiments disclosed may comprise fixation holes 24, dowels 26, or a combination thereof.

The bracket in this example not forming part of the invention comprises only one wall element 14 extending from the base 12. The wall element 14 comprises a connection flange 16 extending from the upper end of the wall element 14 and in a direction substantially parallel with the base 12 and forms a channel 18 extending in the longitudinal direction of the bracket.

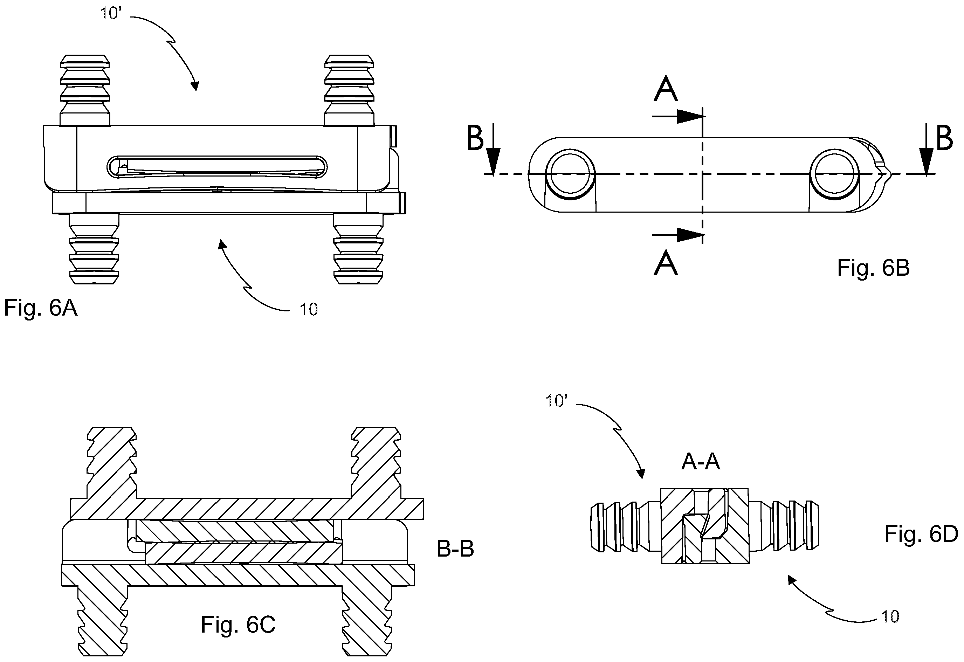

As shown in fig. 3D and 3G, the underside of the connection flange 16 comprises a surface which slopes downwards towards the base 12, and hereby forms a "hook-like" shape of the connection flange, such that when two brackets 10,10' are brought into connection, the "hook" ensures that the brackets 10,10' are locked together in all directions perpendicular to the longitudinal direction of the channel 18 (see fig. 6D).

As can also be seen from the figures, the length of the connection flange 16 is shorter than the length of the wall element 14. This ensures that two brackets 10,10' may be positioned overlapping before being interconnected by a sliding motion in the longitudinal direction of the channel 18. As previously disclosed, having the possibility of arranging the bracket overlapping, limits the need of installation space.

The bracket shown in the example not forming part of the invention comprises two stops 28. A first stop 28 being arranged on an upper surface of the flange element 16, and the second stop being arranged within the channel. Hereby, when two brackets 10,10' are slidably connected, the first stop 28 of the first bracket 10 abuts against the second stop 28 of the second bracket 10', and vice versa.

Fig. 3H shows a perspective view of an example not forming part of the invention of the bracket 10. The bracket 10 shown in fig. 3H in principle corresponds to the bracket 10 shown in fig. 3A-3G, but as can be seen, only comprises one fixation means 26, and may therefore be arranged as a much shorter bracket 10 if desired.

The brackets 10 shown in the examples not forming part of the invention in figs. 3A-3H may, due to the arrangement of only one wall element 14, be arranged more narrow compared to the embodiments shown in the previous figures.

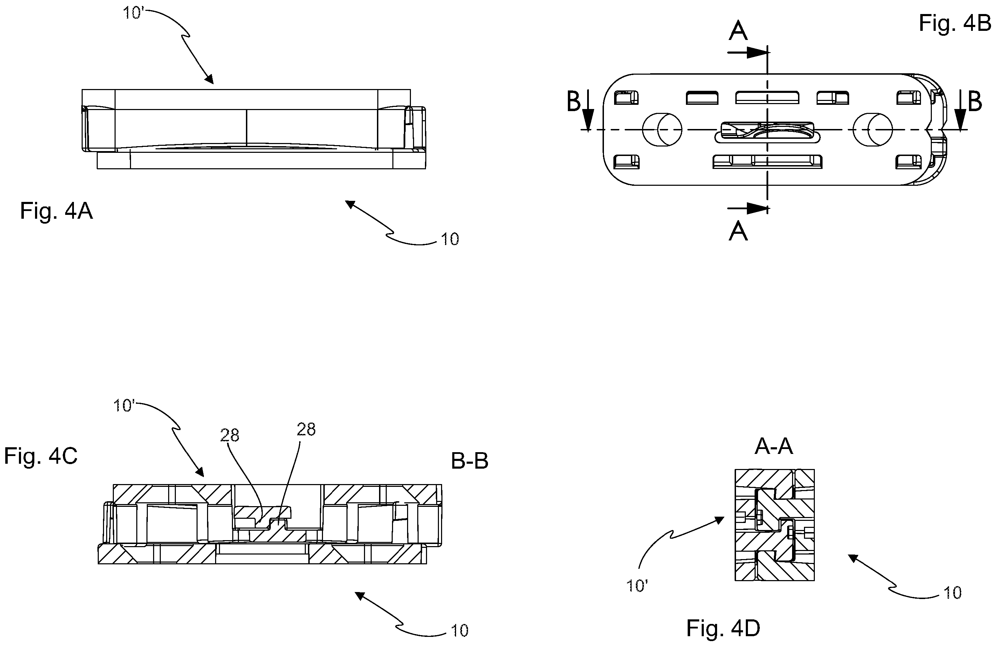

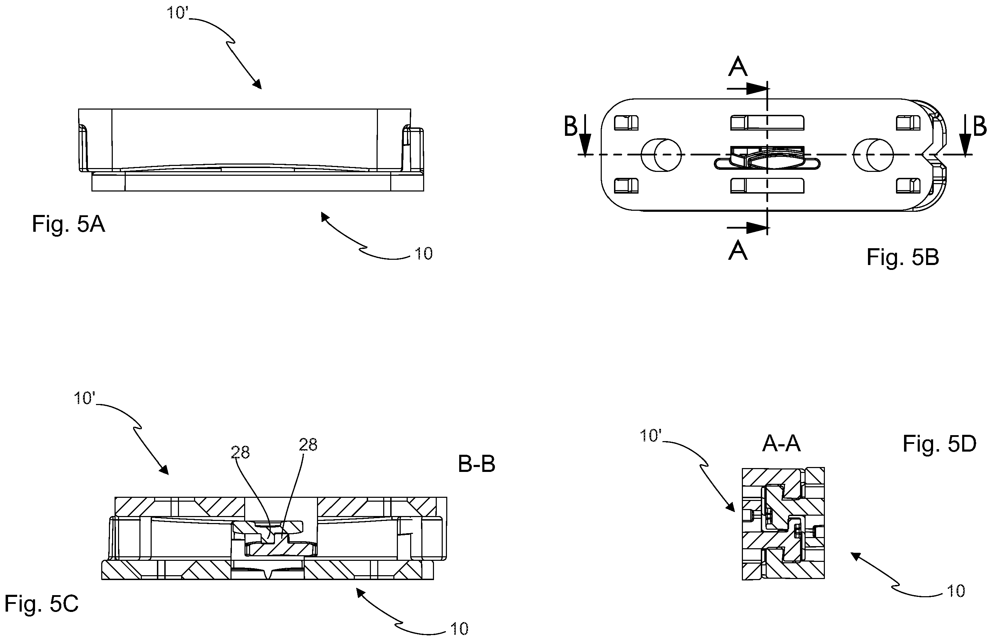

Figures 4A-B, 5A-5B and 6A-6B show a side and top view of two interconnected brackets 10,10' of the different embodiments.

Figs, 4A, 5A and 6A all show side views of two fully interconnected brackets 10,10'. The brackets 10,10' are substantial identical and when being fully interconnected, the brackets are displaced in relation to each other, as can be seen, by a distance corresponding to a width of the stop 28.

The views further illustrate the reduced friction between the two brackets 10,10' by the arrangement of the concave surfaces.

Figs. 4B, 5B and 6B illustrate the embodiments shown in figs. 4A, 5A and 6A. The brackets 10,10' are displaced in the longitudinal direction in relation to each other by a distance corresponding to the width of the stop. The two brackets 10,10' are in the transverse direction due to the arrangement of the wall element(s) and the connection flange(s) 16 sideways aligned in relation to each other, which ensures an aligned mounting of the furniture parts.

Figs. 4C-4D, 5C-5D and 6C-6D show cross-sectional views of the brackets shown in figs. 4A-B, 5A-5B and 6A-6B.

Figs. 4C, 5C and 6C illustrate cross-sectional views along lines B-B of figs. 4B, 5B and 6B.

The figures show the brackets 10,10' of the different embodiments fully interconnected and clearly illustrate the displacement of the brackets due to the width of the stops 28.

Figs. 4D, 5D and 6D illustrate the interconnection of the brackets 10,10' due to the arrangement of the base elements 12, the wall elements 14 and the connection flanges 16. As can be clearly seen, the brackets 10,10' are "locked" in relation to each other in all directions substantially perpendicular to the longitudinal direction of the channel 28 and slidably connected in the longitudinal direction of the channel until the stops 28 on each engage.

In the following is given a list of reference signs that are used in the detailed description of the invention and the drawings referred to in the detailed description of the invention.
- 10, 10': Bracket
- 12: Base
- 14,14': Wall element
- 16: Connection flange
- 18: Channel
- 20: Concave upper part
- 22: Opening
- 24: Fixation hole
- 26: Fixation means
- 28: Stops
- 30: Notch

## Claims

1. Bracket (10) for interconnecting two furniture parts, said bracket (10) having a first and second end, and a base (12) with a lower surface for facing and interconnection with a first furniture part and an upper surface, said bracket (10) having at least one wall element (14) projecting from said upper surface, and for facing and interconnection with an identical second bracket (10) arranged on a second furniture part,
said at least one wall element (14) and said base (12) defining a channel (22) configured to receive and interconnect with at least one wall element (14) of said second bracket (10'),
said bracket (10) further comprising a fixed stop (28) within said channel (22) at a central longitudinal position of said bracket (10), for interacting with an identical stop (28) on said second bracket (10), for preventing movement between said brackets (10,10') beyond said stop (28), wherein said channel (22) is open at said first and second end, such that said at least one wall element (14) of said second bracket (10') may be inserted into said channel (22) from either end.

2. A bracket (10) according to claim 1, wherein said at least one wall element (14) comprises a connection flange (16) extending from said wall element (14) at an upper end thereof, such that when said bracket (10) has been connected to said second bracket (10'), said connection flange (16) prevents said brackets (10,10') from being disengaged in a direction transverse in relation to a longitudinal direction of said channel (22).

3. A bracket (10) according to claim 2, wherein said connection flange (16) only spans part of a longitudinal direction of said bracket (10).

4. A bracket (10) according to claim 2 or 3, wherein said stop (28) is arranged on said connection flange (16) and/or said wall element (14) and/or said base (12) in said channel (22) between said connection flange (16) and said upper surface of said base (12).

5. A bracket (10) according to any of the previous claims, wherein an upper part of said at least one wall element (14) comprises a concave shape (20).

6. A bracket (10) according to any of claims 2-4, wherein a lower surface of said connection flange (16) has a downwards inclination in relation to said upper surface of said base (12).

7. A bracket (10) according to any of the previous claims, wherein said first wall element (14) is extending along a first side of said base (12), and the bracket (10) comprises a second wall element (14') extending parallel with said first wall element (14) towards an opposite second side of said base (12), said second wall element (14') extending a shorter distance along said base (12) compared to said first wall element (14).

8. A system comprising two brackets (10) according to any of claims 1-7.

9. A method for interconnecting two furniture parts, wherein said method comprises the following steps:
• providing a system according to claim 8,
• arranging first and second brackets (10,10') on first and second furniture parts,
• engaging said brackets (10,10'), and
• connecting said brackets (10,10') by a sliding motion in a longitudinal direction of said channel (22) until said fixed stop (28) on each bracket (10,10') abuts and prevents further sliding movement of said brackets (10,10') in said longitudinal direction.

10. A method according to claim 9, wherein before said step of connecting said brackets (10,10') by a sliding motion, said brackets (10,10') are engaged partly overlapping in a direction substantial perpendicular to said longitudinal direction.

## Patentansprüche

1. Klammer (10) zur Verbindung von zwei Möbelteilen, wobei die Klammer (10) ein erstes und zweites Ende aufweist, und eine Basis (12) mit einer unteren Fläche zum Anliegen an und zur Verbindung mit einem ersten Möbelteil und einer oberen Fläche, wobei die Klammer (10) wenigstens ein Wandelement (14) aufweist, das von der oberen Fläche vorsteht, und zum Anliegen an und zur Verbindung mit einer identischen zweiten Klammer (10), die an einem zweiten Möbelteil angeordnet ist,
wobei das wenigstens eine Wandelement (14) und die Basis (12) einen Kanal (22) definieren, der konfiguriert ist, um wenigstens ein Wandelement (14) der zweiten Klammer (10') aufzunehmen und damit zu verbinden,
wobei die Klammer (10) ferner einen festen Anschlag (28) innerhalb des Kanals (22) an einer mittleren Längsposition der Klammer (10) umfasst, zum Zusammenwirken mit einem identischen Anschlag (28) an der zweiten Klammer (10), zum Verhindern einer Bewegung zwischen den Klammern (10, 10') über den Anschlag (28) hinaus, wobei der Kanal (22) am ersten und zweiten Ende offen ist, so dass das wenigstens eine Wandelement (14) der zweiten Klammer (10') von beiden Enden in den Kanal (22) eingeführt werden kann.

2. Klammer (10) nach Anspruch 1, wobei das wenigstens eine Wandelement (14) einen Verbindungsflansch (16) umfasst, der sich von dem Wandelement (14) an einem oberen Ende davon erstreckt, so dass, wenn die Klammer (10) mit der zweiten Klammer (10') verbunden wurde, der Verbindungsflansch (16) verhindert, dass die Klammern (10, 10') in einer Richtung quer in Bezug auf eine Längsrichtung des Kanals (22) außer Eingriff gebracht werden.

3. Klammer (10) nach Anspruch 2, wobei sich der Verbindungsflansch (16) nur über einen Teil einer Längsrichtung der Klammer (10) erstreckt.

4. Klammer (10) nach Anspruch 2 oder 3, wobei der Anschlag (28) an dem Verbindungsflansch (16) und/oder dem Wandelement (14) und/oder der Basis (12) in dem Kanal (22) zwischen dem Verbindungsflansch (16) und der oberen Fläche der Basis (12) angeordnet ist.

5. Klammer (10) nach einem der vorhergehenden Ansprüche, wobei ein oberer Teil des wenigstens einen Wandelements (14) eine konkave Form (20) umfasst.

6. Klammer (10) nach einem der Ansprüche 2-4, wobei eine untere Fläche des Verbindungsflansches (16) eine Abwärtsneigung in Bezug auf die obere Fläche der Basis (12) aufweist.

7. Klammer (10) nach einem der vorhergehenden Ansprüche, wobei sich das erste Wandelement (14) entlang einer ersten Seite der Basis (12) erstreckt, und die Klammer (10) ein zweites Wandelement (14') umfasst, das sich parallel zum ersten Wandelement (14) zu einer gegenüberliegenden zweiten Seite der Basis (12) erstreckt, wobei sich das zweite Wandelement (14') über eine kürzere Strecke entlang der Basis (12) erstreckt als das erste Wandelement (14).

8. System, umfassend zwei Klammern (10) nach einem der Ansprüche 1-7.

9. Verfahren zur Verbindung von zwei Möbelteilen, wobei das Verfahren die folgenden Schritte umfasst:
• Bereitstellen eines Systems nach Anspruch 8,
• Anordnen von ersten und zweiten Klammern (10, 10') an ersten und zweiten Möbelteilen,
• Ineingriffbringen der Klammern (10, 10'), und
• Verbinden der Klammern (10, 10') durch eine Gleitbewegung in einer Längsrichtung des Kanals (22), bis der feste Anschlag (28) an jeder Klammer (10, 10') anliegt und eine weitere Gleitbewegung der Klammern (10, 10') in der Längsrichtung verhindert.

10. Verfahren nach Anspruch 9, wobei vor dem Schritt des Verbindens der Klammern (10, 10') durch eine Gleitbewegung die Klammern (10, 10') teilweise überlappend in einer Richtung im Wesentlichen senkrecht zur Längsrichtung in Eingriff gebracht werden.

## Revendications

1. Support (10) pour relier deux éléments de meuble entre eux, ledit support (10) comportant une première et une seconde extrémité, ainsi qu'une base (12) présentant une surface inférieure destinée à faire face et à être reliée à un premier élément de meuble et une surface supérieure, ledit support (10) comportant au moins un élément de paroi (14) faisant saillie depuis ladite surface supérieure, et destiné à faire face et à être relié à un second support identique (10) agencé sur un second élément de meuble,
ledit au moins un élément de paroi (14) et ladite base (12) définissant un canal (22) configuré pour recevoir et être relié à au moins un élément de paroi (14) dudit second support (10'), ledit support (10) comprenant en outre une butée fixe (28) à l'intérieur dudit canal (22) au niveau d'une position longitudinale centrale dudit support (10), pour interagir avec une butée identique (28) sur ledit second support (10), pour empêcher un mouvement entre lesdits supports (10, 10') au-delà de ladite butée (28), dans lequel ledit canal (22) est ouvert au niveau desdites première et seconde extrémités, de telle sorte que ledit au moins un élément de paroi (14) dudit second support (10') peut être inséré à l'intérieur dudit canal (22) à partir de l'une ou l'autre extrémité.

2. Support (10) selon la revendication 1, dans lequel ledit au moins un élément de paroi (14) comprend une bride de liaison (16) s'étendant depuis ledit élément de paroi (14) au niveau d'une extrémité supérieure de celui-ci, de telle sorte que lorsque ledit support (10) a été relié audit second support (10'), ladite bride de liaison (16) empêche lesdits supports (10, 10') de se libérer dans une direction transversale par rapport à une direction longitudinale dudit canal (22).

3. Support (10) selon la revendication 2, dans lequel ladite bride de liaison (16) ne s'étend que sur une partie d'une direction longitudinale dudit support (10).

4. Support (10) selon la revendication 2 ou 3, dans lequel ladite butée (28) est agencée sur ladite bride de liaison (16) et/ou ledit élément de paroi (14) et/ou ladite base (12) dans ledit canal (22) entre ladite bride de liaison (16) et ladite surface supérieure de ladite base (12).

5. Support (10) selon l'une quelconque des revendications précédentes, dans lequel une partie supérieure dudit au moins un élément de paroi (14) comprend une forme concave (20).

6. Support (10) selon l'une quelconque des revendications 2 à 4, dans lequel une surface inférieure de ladite bride de liaison (16) présente une inclinaison vers le bas par rapport à ladite surface supérieure de ladite base (12).

7. Support (10) selon l'une quelconque des revendications précédentes, dans lequel ledit premier élément de paroi (14) s'étend le long d'un premier côté de ladite base (12), et le support (10) comprend un second élément de paroi (14') s'étendant parallèlement audit premier élément de paroi (14) vers un second côté opposé de ladite base (12), ledit second élément de paroi (14') s'étendant sur une distance plus courte le long de ladite base (12) par rapport audit premier élément de paroi (14).

8. Système comprenant deux supports (10) selon l'une quelconque des revendications 1 à 7.

9. Procédé pour relier deux éléments de meuble entre eux, dans lequel ledit procédé comprend les étapes suivantes :
• la fourniture d'un système selon la revendication 8,
• l'agencement des premier et second supports (10, 10') sur les premier et second éléments de meuble,
• la mise en prise desdits supports (10, 10'), et
• la liaison desdits supports (10, 10') par un mouvement de coulissement dans une direction longitudinale dudit canal (22) jusqu'à ce que ladite butée fixe (28) sur chaque support (10, 10') vienne en butée et empêche un mouvement de coulissement supplémentaire desdits supports (10, 10') dans ladite direction longitudinale.

10. Procédé selon la revendication 9, dans lequel avant ladite étape de liaison desdits supports (10, 10') par un mouvement de coulissement, lesdits supports (10, 10') sont mis en prise en se chevauchant en partie dans une direction sensiblement perpendiculaire à ladite direction longitudinale.
